# EUROPÄISCHE PATENTSCHRIFT

(11) **EP 1 590 195 B1**
(45) Veröffentlichungstag und Bekanntmachung des Hinweises auf die Patenterteilung: **07.04.2010**
(21) Anmeldenummer: 04707500.7
(22) Anmeldetag: 03.02.2004
(51) Int. Cl.: B60L 5/39

(54) **STROMABNEHMER**
CURRENT COLLECTOR
PRISE DE COURANT

(30) Priorität: 03.02.2003 DE 10304379; 15.02.2003 DE 10306376
(43) Veröffentlichungstag der Anmeldung: 02.11.2005
(73) Patentinhaber: Schunk Bahn- und Industrietechnik GmbH, 35435 Wettenberg (DE)
(72) Erfinder: LAMSCHICK, Jürgen, 22880 Wedel (DE)
(74) Vertreter: Stoffregen, Hans-Herbert
(86) Internationale Anmeldenummer: PCT/EP2004/000965
(87) Internationale Veröffentlichungsnummer: WO 2004/069579

(56) Entgegenhaltungen:
- DE-A- 3 321 315
- DE-U- 8 709 213
- GB-A- 177 433

## Beschreibung

Die Erfindung bezieht sich auf einen Stromabnehmer für eine dritte Schiene umfassend ein von einem Fahrzeug ausgehendes Basisparallelogramm mit von diesem ausgehender Halterung für einen Schleifschuh, wobei das Basisparallelogramm einen schienenseitig verlaufenden ersten Schenkel, einen entlang des ersten Schenkels verlaufenden schienenfemliegenden zweiten Schenkel sowie gelenkig mit jeweils ersten und zweiten Enden des ersten und zweiten Schenkels verbundene dritte und vierte Schenkel umfasst und die Halterung für den Schleifschuh mit einem einzigen zu dem Fahrzeug mit zumindest einer seiner Schwenkachsen verstellbaren Schenkel verbunden ist.

Bei einem entsprechenden Stromabnehmer bildet die Halterung für den Schleifschuh den ersten Schenkel, der mit den angrenzenden Schenkeln gelenkig verbunden ist. Um z. B. im Falle eines Hängenbleibens der Halterung bzw. des Schleifschuhs ein vollständiges Zerstören des Stromabnehmers zu vermeiden, sind Sollbruchstellen in beiden geneigten Schenkeln vorgesehen. Da die auf dem jeweiligen Anlenkpunkt einwirkenden Kräfte in Abhängigkeit von der Fahrtrichtung des Fahrzeuges unterschiedlich sind, wird üblicherweise im Störfall nur eine der Sollbruchstellen zerstört. Dies bedeutet, dass zumindest über eine kurze Wegstrecke die Halterung mit dem Schleifschuh mitgenommen wird, wodurch die Gefahr einer Beschädigung des Stromabnehmers, dessen Umfeld und der Stromschiene besteht. Da ferner die zu dem Antrieb des Fahrzeuges führende Leiter unmittelbar von dem Schleifschuh bzw. dessen Halterung ausgehen, kann ein Abreißen an verschiedenen Stellen erfolgen. Da ferner sämtliche Schenkel des Basisparallelogramrns aus Metall bestehen, muss dieses bzw. ein das Basisparallelogramm aufnehmendes und mit dem Fahrzeug verbundenes Gehäuse gegenüber ersterem z. B. durch isolierplatten oder -balken elektrisch isoliert werden. Auch zeigen entsprechende Stromabnehmer ein relativ hohes Gewicht.

Nachteilig ist des Weiteren, dass, wenn der Neigungswinkel des zu der Halterung bzw. dem Schleifschuh führenden Schenkels des Parallelogramms zu der dritten Schiene relativ groß ist, die Reaktion auf Hindernisse bzw. das Ausweichen des Parallelogramms in Bezug auf solche in Abhängigkeit von der Richtung des Fahrzeugs unterschiedlich ist, wodurch ebenfalls eine Störanfälligkeit mit entsprechenden Folgeschäden gegeben ist.

Aus dem DE 87 09 213 U1 ist ein Stromabnehmer bekannt, der einen Schleifschuh umfasst, der von einer Schwingenanordnung ausgeht.

Ein an einem Schleifdraht anlegbarer Stromabnehmer mit Sollbruchstelle ist der AT 297 798 zu entnehmen.

Die GB 177 433 sieht einen Stromabnehmer für eine dritte Schiene mit einem Parallelogramm vor, von dem ein Schleifschuh ausgeht. Der eine L-Form aufweisende schleifschuh ist unmittelbar mit einer Verlängerung eines Schenkels des Parallelogramms verbunden und weist eine geringere Festigkeit als dieses auf. Der vorliegenden Erfindung liegt das Problem zu Grunde, einen Stromabnehmer der eingangs genannten Art so weiterzubilden, dass ein neutrales Verhalten in Bezug auf Hindernisse gegeben ist, also ein gleich gutes Ausweichen unabhängig von der Fahrtrichtung des Fahrzeuges erfolgt. Ferner soll der Stromabnehmer relativ leicht sein. Auch soll im Fall, dass auf die Halterung bzw. den Schleifschuh unzulässig große Kräfte einwirken, ein Lösen von dem Basisparallelogramm möglich sein, ohne dass die Gefahr besteht, dass dieses zerstört wird.

Erfindungsgemäß wird das Problem durch einen Stromabnehmer der eingangs genannten Art im Wesentlichen dadurch gelöst, dass die Halterung mit dem ersten oder dem vierten Schenkel über zumindest eine eine Sollbruchstelle aufweisende Verbindung verbunden ist.

Geht die Halterung vorzugsweise von dem zu dem Fahrzeug mit seinen beiden Schwenkachsen verstellbaren Seitenschenkel als dem vierten Schenkel aus, so könnte auch die Halterung von dem ersten schienenseitig verlaufenden Schenkel ausgehen, ohne die Erfindung zu verlassen.

Die Halterung ist mit dem entsprechenden Schenkel über zumindest eine eine Sollbruchstelle aufweisende Verbindung verbunden. Vorzugsweise ist jedoch die Halterung insbesondere über eine oder mehrere Gruppen von mehreren jeweils eine Sollbruchstelle aufweisenden Verbindungen wie Bolzen verbunden.

Der Bolzen selbst bildet dabei gleichzeitig mit den Kontaktflächen der Halterung eine elektrisch leitende Verbindung zwischen dem Schleifschuh und dem Schenkel.

Der zu dem Antrieb des Fahrzeugs führende Stromleiter geht sodann von dem Schenkel selbst aus, so dass beim Abreißen der Halterung bzw. des Schleifschuhs der Stromleiter selbst nicht beschädigt wird.

Nach einem weiteren eigenerfinderischen Gehalt aufweisenden Vorschlag der Erfindung ist vorgesehen, dass sowohl der erste als auch der zweite Schenkel aus elektrisch isolierendem Material bestehen. Hierdurch ergeben sich erhebliche Vorteile für den erfindungsgemäßen Stromabnehmer. So ist aufgrund des Materials eine Gewichtsreduzierung gegeben. Des Weiteren sind zusätzliche Isolationsmaßnahmen nicht notwendig, die anderenfalls erforderlich wären, wenn sämtliche Schenkel des Basisparallelogramms aus Metall bestehen, wie dies nach dem Stand der Technik der Fall ist.

Um eine stabile axiale Führung des Stromabnehmers sicherzustellen, ist des Weiteren vorgesehen, dass der zweite Schenkel durch zumindest zwei stabförmige Elemente wie Lenker gebildet ist. Diese können mit dem dritten und vierten Schenkel über kalottenförmig ausgebildete Lagerpunkte gelenkig verbunden sein, wodurch eine Verwindungsfreiheit erzielbar ist.

Zur weiteren Gewichtsreduzierung kann der erste Schenkel wie Schwinge über eine Hohlwelle mit Seitenwangen eines im Schnitt U-förmigen Abschnitts des mit dem Faluzeug verbundenen Stromabnehmergehäuses verbunden sein, so dass folglich ein Abschnitt des Gehäuses den dritten Schenkel des Basisparallelogramms bildet.

Der vierte die Halterung aufweisende und aus Metall bestehende Schenkel weist vorzugsweise zwei miteinander verbundene Seitenwangen auf, die einerseits von den Schwingachsen, von denen der erste und der zweite Schenkel ausgehen, und andererseits von den Verbindungselementen wie Bolzen durchsetzt sind, um die mechanische und elektrische Verbindung zu der Halterung des Schleifschuhs zu ermöglichen.

Des Weiteren beschreibt die Verbindungslinie zwischen den Schwenkachsen des ersten Schenkels zu der dritten Schiene einen Winkel ϕ, der bei sich auf der dritten Schiene abstützendem Schleifschuh ≤ 15° beträgt. Hierdurch bedingt ergibt sich ein neutrales Verhalten des Stromabnehmers in Bezug auf Hindernisse, d. h., dass unabhängig von der Fahrtrichtung des Fahrzeuges ein gleich gutes Reagieren auf solche erfolgt.

Damit der Schleifschuh im erforderlichen Umfang und mit dem notwendigen Druck auf der dritten Schiene anlegbar ist, geht von dem Fahrzeug bzw. dem Stromabnehmergehäuse ein Federelement wie eine Druckfeder aus, die an dem ersten Schenkel angelenkt ist. Dabei wird der Anlenkpunkt so gewählt, dass bei auf der dritten Schiene aufliegendem Schleifschuh bei Normalbetrieb ein konstanter Druck einwirkt. Wird im Störfall der Stromabnehmer angehoben, erfolgt eine Verkürzung der wirksamen Länge der Druckfeder bei gleichzeitiger Verlagerung des Anlenkpunktes derart, dass eine Selbsthaltung in angehobener Position erfolgt. Eine zusätzliche Sicherung durch z. B. eine Klinke ist möglich.

Zur Realisierung ist hierzu vorgesehen, dass von dem Gehäuse oder dem Fahreug von einem ersten Anlenkpunkt eine die Druckkraft auf den ersten Schenkel ausübende Feder ausgeht, die mit dem ersten Schenkel in einem zweiten Anlenkpunkt verbunden ist, der zwischen dessen Drehachsen derart liegt, dass bei auf der dritten Schiene abgestütztem Schleifschuh der zweite Anlenkpunkt zwischen der dritten Schiene und gedachter Geraden zwischen dem ersten Anlenkpunkt und der den ersten mit dem zweiten Schenkel verbindenden Drehachse verläuft und dass bei angehobener Position der zweite Anlenkpunkt zwischen der Geraden und dem Fahrzeug bzw. Befestigung des Gehäuses mit dem Fahrzeug verläuft, wobei die auf den zweiten Anlenkpunkt einwirkende Druckkraft zu einer Selbsthaltung des Basisparallelogramms in der angehobenen Position führt.

In Weiterbildung der Erfindung kann auf den Stromabnehmer ein pneumatisch arbeitender Zylinder einwirken, der von dem Fahrzeug bzw. Stromabnehmergehäuse ausgeht und zu dem ersten schienenseitig verlaufenden Schenkel verläuft. Hierdurch kann u. a. ein gewünschtes automatisches Anheben bzw. Absenken des Stromabnehmers erfolgen.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung eines ein Basisparallelogramm umfassenden Stromabnehmers nach dem Stand der Technik,
- Fig. 2 und 3: Prinzipdarstellungen eines erfindungsgemäßen Stromabnehmers mit Basisparallelogramm,
- Fig. 4: eine Seitenansicht eines erfindungsgemäßen Stromabnehmers,
- Fig. 5: eine Draufsicht des Stromabnehmers nach Fig. 4,
- Fig. 6: eine Rückansicht des Stromabnehmers nach Fig. 4,
- Fig. 7: einen Schnitt entlang der Linie G-G in Fig. 4 und
- Fig. 8: einen Schnitt entlang der Linie H-H in Fig. 4.

Die Erfindung bezieht sich auf einen Stromabnehmer für eine dritte Schiene, wie diese zur Stromversorgung von Elektroantrieben von Fahrzeugen z. B. bei U-Bahnen zum Einsatz gelangen. Entsprechende aus dem Stand der Technik bekannte Stromabnehmer weisen ein Basisparallelogramm 10 auf, das von einem Gehäuse ausgeht und mit dem Fahrzeug verbunden ist.

Ein Basisparallelogramm 10 nach dem Stand der Technik umfasst Schenkel 12, 14, 16, 18, wobei der schienenseitig verlaufende Schenkel 12 durch den Schleifschuh selbst gebildet ist, über den der Strom zum Antrieb fließt. Der Schleifschuh ist dabei mit den angrenzenden Seitenschenkeln 14, 18 über Sollbruchstellen verbunden, um ein Lösen bei unzulässig auftretenden Kräften zu ermöglichen. Hierdurch soll sichergestellt werden, dass der gesamte Stromabnehmer nicht zerstört wird.

Allerdings ist aufgrund des Aufbaus des Basisparallelogramms 10 und des fest mit dem Fahrzeug bzw. dem Stromabnehmergehäuse verbundenen schienenfemliegenden Schenkels 16 und des Einstellwinkels der Schenkel 14, 18 zu der dritten Schiene der Nachteil gegeben, dass zum einen eine fahrtrichtungsabhängige Druckbeaufschlagung auf die Sollbruchstellen erfolgt, so dass im Störfall nicht zwingend die Sollbruchstellen zerstört werden, und zum anderen ein gleichermaßen erfolgendes Ausweichen von Hindernissen nicht gegeben ist. Auch zeigen entsprechende Stromabnehmer ein hohes Gewicht und müssen über Isolierplatten oder entsprechende Elemente gegenüber dem Fahrzeug elektrisch isoliert werden.

Im Falle einer Beschädigung sind aufwendig Arbeiten erforderlich. Auch ist nachteilig, dass der zu dem Schleifschuh führende die Verbindung zum Antrieb herstellende Leiter abreißt und Überschläge erzeugt.

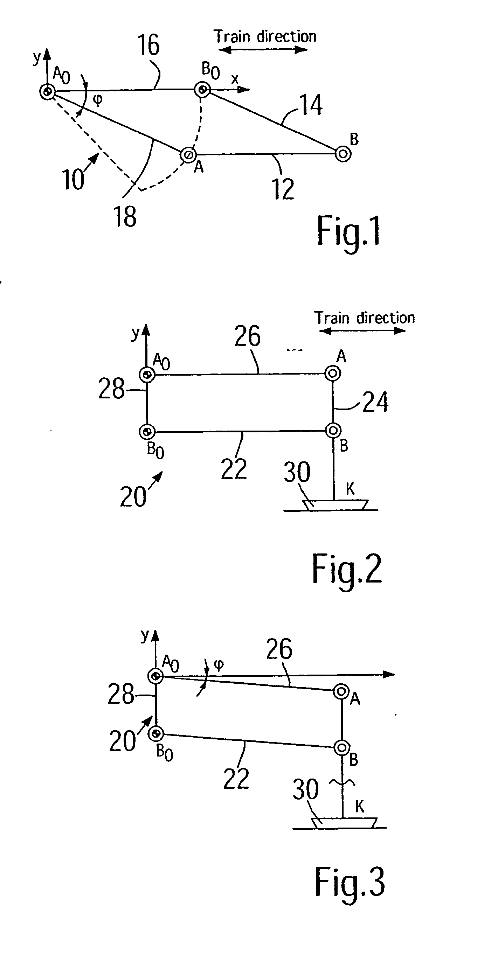

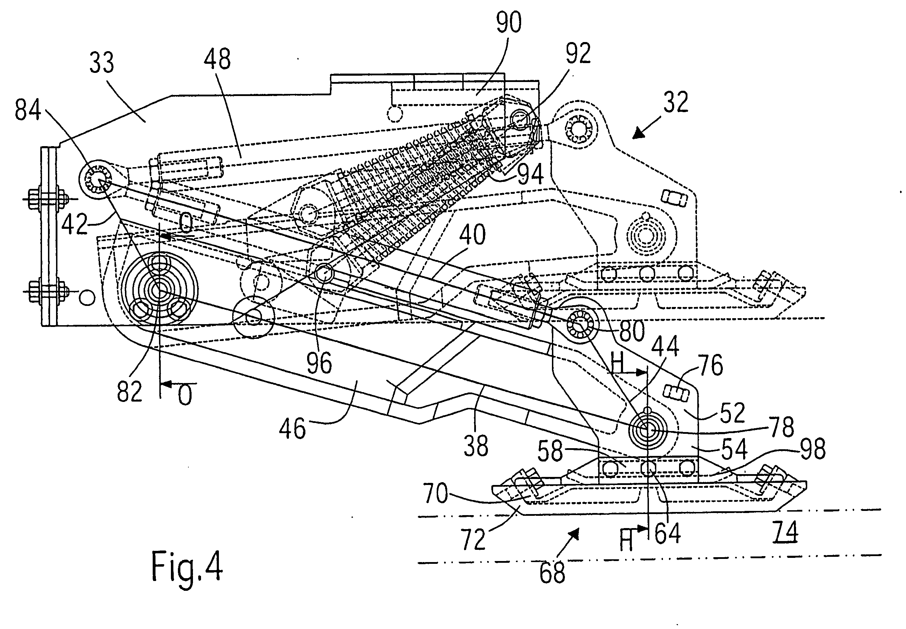

All diese Nachteile werden mit dem erfindungsgemäßen Stromabnehmer, der gleichfalls auf dem Prinzip eines Basisparallelogramms aufbaut, vermieden. So wird aus den Prinzipdarstellungen der Fig. 2 und 3 erkennbar, dass bei einem erfindungsgemäßen Basisparallelogramm 20 keiner seiner Schenkel 22, 24, 26, 28 durch einen Schleifschuh 30 gebildet wird. Dabei wird der schienenseitig verlaufende Schenkel 22 als erster Schenkel und der parallel oder in etwa parallel zu diesem schienenfernliegende Schenkel 26 als zweiter Schenkel bezeichnet. Die die ersten Schenkel und zweiten Schenkel 22, 26 verbindenden Schenkel 28, 24 werden als dritte und vierte Schenkel bezeichnet, wobei die dritten und vierten Schenkel 28, 24 vorzugsweise erheblich kürzer als die ersten und zweiten Schenkel 22, 26 sind, wie dies nicht nur aus den Prinzipdarstellungen der Fig. 2 und 3, sondern auch aus insbesondere der Fig. 4 ersichtlich wird. Durch die Ausbildung der Schenkellängen ergibt sich unter anderem auch der Vorteil, dass dann, wenn die Halterung 58 von dem vierten Schenkel 24 ausgeht, sich günstige Hebelkräfte ausbilden.

Erfindungsgemäß wird der Schleifschuh 30 durch keinen Schenkel 22, 24, 26, 28 des Basisparallelogramms 20 gebildet, sondern ist vielmehr mit einem der Schenkel verbunden, der zumindest eine verstellbare Schwenkachse aufweist. Im Ausführungsbeispiel ist der Schleifschuh mit dem auch als Seitenschenkel zu bezeichnenden vierten Schenkel 24 bzw. einer Verlängerung dieses verbunden. Selbstverständlich bestünde auch die Möglichkeit, den Schleifschuh 30 mit dem ersten schienenseitig verlaufenden Schenkel 22 bzw. einer Verlängerung dieses zu verbinden. Unabhängig hiervon ist hierdurch der Vorteil gegeben, dass es nur noch einer Sollbruchstelle bzw. einer Gruppe von Sollbruchstellen bedarf, um im Störfall ein Lösen des Schleifschuhs 30 bzw. der den Schleifschuh 30 aufnehmenden Halterung sicherzustellen, die in Fig. 4 mit den Bezugszeichen 58 gekennzeichnet ist.

Des Weiteren wird verbleibender Seitenschenkel - im Ausführungsbeispiel der Seitenschenkel 28 oder dritter Schenkel - ortsfest zu dem Fahrzeug ausgerichtet, so dass sich ein geringer Neigungswinkel zwischen den entlang der dritten Schiene verlaufenden Schenkeln 22, 26 und der dritten Schiene mit der Folge ergibt, dass ein neutrales Verhalten in Bezug auf Hindernisse gegeben ist. Dies bedeutet, dass unabhängig von der Fahrtrichtung ein gleich gutes Ausweichen von Hindernissen ermöglicht wird. Insbesondere beschreibt der schienenseitige oder erste Schenkel 22 bzw. eine dessen Schwenkachsen verbindende Gerade (entsprechend in Fig. 4 eingezeichnetem den ersten Schenkel symbolisierenden Schenkel 38) zu der dritten Schiene einen Winkel ϕ mit vorzugsweise ϕ ≤ 15°.

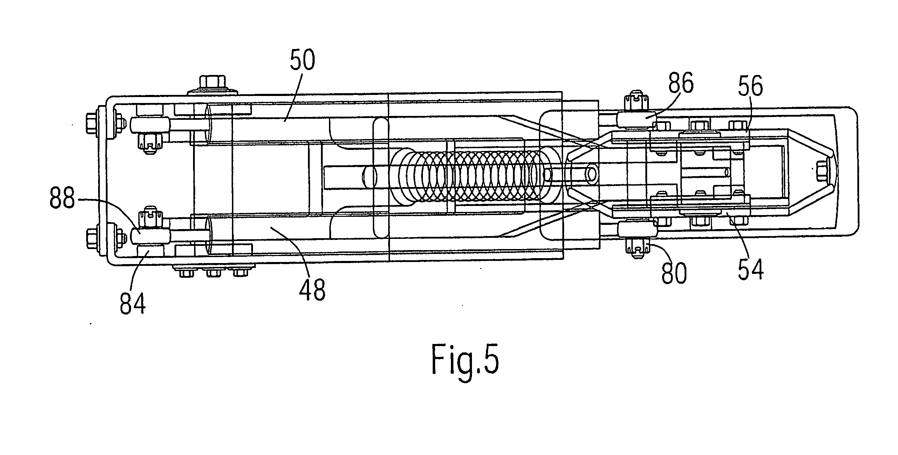

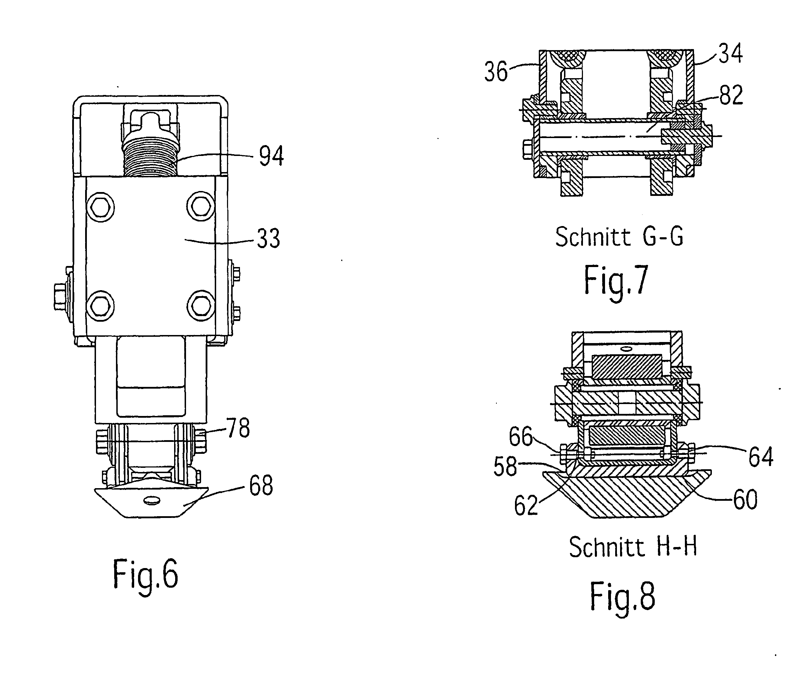

Nähere Einzelheiten des erfindungsgemäßen Stromabnehmers 32 ergeben sich aus den Fig. 4 bis 8.

Ein Stromabnehmer 32 umfasst ein Gehäuse 33, das mit dem Fahrzeug bzw. dessen Unterseite verbunden wie verschraubt ist. Das Parallelogramm 20, das in Fig. 4 durch die ausgezogenen Geraden 38, 40, 42, 44 symbolisiert ist, wird durch eine aus Kunststoff bestehende schienenseitig verlaufende Schwinge 46 als den ersten Schenkel 38, entlang diesem verlaufende zwei Lenker 48, 50 als den zweiten Schenkel 40, die ebenfalls aus elektrisch isolierendem Material bestehen, einen von Seitenwangen 34, 36 gebildeten Abschnitt des Gehäuses 34 als dritten Schenkel 42 sowie einen von einem U-förmigen Kopfteil 52 mit Seitenwangen 54, 56 als den vierten Schenkel 44 gebildet.

Sowohl das Gehäuse 34 als auch das Kopfteil 52 bestehen aus Metall. Von dem Kopfteil 52 geht ein Schleifstückhalter 58 aus, der im Ausführungsbeispiel über Sollbruchstellen 60, 62 aufweisende Bolzen 64, 66 mit dem Kopfteil 52 verbunden ist. Die Anzahl der Bolzen 64, 66 kann zum Beispiel sechs betragen. Die Schleifstückhalterung 58 ist seinerseits mit einem Schleifschuh 68 verbunden, der aus einem Tragteil 70 und einem Verschleißteil 72 besteht, das auf einer dritten Schiene 74 gleitend abgestützt ist, um Strom zu übertragen. Das Verschleißteil 72 kann aus Stahl, Messing, Verbundmaterial und/oder Kohlenstoffmaterial bestehen. Insoweit wird auf hinlänglich bekannte Lösungen und Materialien verwiesen.

Die auch als Scherbolzen zu bezeichnenden Bolzen 64, 66 dienen nicht nur zur mechanischen Verbindung zwischen der Schleifstückhalterung 58 und dem Kopfteil 52 und damit dem Basisparallelogramm 20 des Stromabnehmers 32, sondern auch zur Stromübertragung zwischen dem Schleifschuh 68 und einem Antrieb eines Fahrzeuges. Der Strom wird sodann über einen nicht dargestellten Leiter dem Antrieb zugeführt, der mit dem aus elektrisch leitendem Material bestehenden Kopfteil 52 im Bereich 76 verbunden ist. Somit wird beim Abreißen der Halterung 58 der von dem Kopfteil 52 (vierter Schenkel 44) ausgehende Leiter nicht beschädigt.

Das Kopfteil 52 ist über Drehachsen 78, 80 mit der Schwinge 46 bzw. den Lenkern 48, 50 verbunden. Die gegenüberliegenden Enden sowohl der Schwinge 46 als dem ersten Schenkel als auch den Lenkern 48, 50 als dem zweiten Schenkel sind über Dreh- oder Schwingachsen 82, 84 mit den Wangen 34, 36 des Gehäuses 33 verbunden. Dabei ist die Achse 82 aus Gewichtsersparnisgründen als Hohlwelle ausgebildet.

Um eine verwindungsfreie Verbindung zwischen dem durch das Kopfteil 52 gebildeten vierten Schenkel und dem von dem Abschnitt des Gehäuses 33 gebildeten dritten Schenkel mit dem von den Lenkern 48, 50 gebildeten zweiten Schenkel zu ermöglichen, weisen die Lenker 48, 50 in ihren Enden Lageraugen 86, 88 auf, in die kalottenförmige Abschnitte der Drehachsen 80, 84 eingreifen, wobei die im Bereich des dritten Schenkels, also dem Gehäuse 33 verlaufende Schwenkachse 84 nicht durchgehend ausgebildet ist, sondern aus zwei Wellenstümpfen besteht. Des Weiteren geht vom fahrzeugseitigen Abschnitt 90 des Gehäuses 33, und zwar von einem ersten Anlenkpunkt 92, eine Druckfeder 94 aus, die in einem zweiten Anlenkpunkt 96 mit der Schwinge 46 verbunden ist. Dabei ist der zweite Anlenkpunkt 96 in Bezug auf eine die Drehachse 82 mit dem ersten Anlenkpunkt 92 verbindende Gerade derart ausgerichtet, dass bei auf der dritten Schiene 74 abgestütztem Schleifschuh 68 der zweite Anlenkpunkt 96 zwischen der Geraden und der dritten Schiene 74 verläuft.

In angehobener Stellung (gestrichelte Darstellung in Fig. 4) verläuft der zweite Anlenkpunkt 96 auf gegenüberliegender Seite der Geraden, also zwischen dieser und dem Fahrzeug. Hierdurch bedingt tritt eine Selbsthaltung ein, die dadurch verstärkt wird, dass in der zweiten angehobenen Position die Druckfeder 94 verkürzt und somit größere Kräfte über den zweiten Anlenkpunkt 96 auf die Schwinge 46 eingeleitet werden. Zusätzlich kann die angehobene Position durch nicht dargestellte Klinken oder sonstige Halteeinrichtungen gesichert werden.

Erfindungsgemäß geht der Schleifschuh 68 bzw. dessen Schleifstückhalterung 58 von einem mit zwei Schwenkachsen zu dem Gehäuse 33 bzw. dem Fahrzeug verstellbaren Schenkel - im Ausführungsbeispiel von dem vierten Schenkel 24, 44 - aus, der durch das Kopfteil 52 gebildet wird. Somit bedarf es allein einer Sollbruchstelle bzw. einer Gruppe von Sollbruchstellen, die im Ausführungsbeispiel durch die Scherbolzen 64, 66 gebildet werden, wodurch bei einem durch unzulässig hohe Kräfte erfolgendem Abreißen der Halterung 58 sichergestellt ist, dass eine weitere Beschädigung des Stromabnehmers 32 nicht erfolgt.

Dadurch, dass der stromleitende Teil, d. h. der Schleifschuh 68 mit der Halterung 58 und dem Kopfteil 22 gegenüber dem Stromabnebnergehäuse 34 über die Schwinge 46 und den Lenkern 48, 50 elektrisch isoliert ist, ergibt sich nicht nur eine erhebliche Gewichtseinsparung, sondern der zusätzliche Vorteil, dass zusätzliche Isolationsmaßnahmen gegenüber dem Fahrzeug nicht erforderlich sind. Durch das Vorhandensein von den zwei Lenkern 48, 50 als dem zweiten Schenkel 26, 40 des Basisparallelogramms 20 ergibt sich eine geführte axiale Ausrichtung des Stromabnehmers 32, ohne dass zusätzliche Führungsmaßnahmen erforderlich sind. Gleichzeitig ist eine Verwindungsfreiheit aufgrund der Lagerungen gegeben.

Die Druckfeder 94 stellt des Weiteren sicher, dass bei auf der dritten Schiene 74 abgestütztem Schleifschuh 68 eine gleichmäßige Druckeinwirkung erfolgt, wobei bei angehobenem Schleifschuh 68 eine Selbsthaltung gegeben ist.

Durch die Ausbildung der entlang der dritten Schiene 74 verlaufenden ersten und zweiten Schenkel 22, 38, 26, 40 aus Kunststoff wird eine Dämpfung von Schwingungen und Stößen bewirkt, wodurch eine hohe Laufruhe erzielbar ist.

Des Weiteren geht vom schienenseitigen Bereich des Kopfteils 52 eine Notlaufzunge 98 aus, die dann, wenn der Laufschuh 68 mit dessen Halterung 62 abgerissen sein sollte, auf der dritten Schiene 44 gleitend abstützbar ist, um das Fahrzeug weiter antreiben und zu einem Reparaturort fahren zu können.

Ferner kann zwischen dem Fahrzeug bzw. dem Gehäuse 33 und der Schwinge 46 ein nicht dargestellter Pneumatikzylinder verlaufen, um ein automatisches Anheben bzw. Absenken des Stromabnehmers, d. h. des Schleifschuhs 68 mit konstruktiv einfachen Maßnahmen zu ermöglichen.

## Patentansprüche

1. Stromabnehmer (32) für eine dritte Schiene (74) umfassend ein von einem Fahrzeug ausgehendes Basisparallelogramm (20) mit von diesem ausgehender Halterung (58) für einen Schleifschuh (30, 68), wobei das Basisparallelogramm einen schienenseitig verlaufenden ersten Schenkel (22, 38), einen entlang des ersten Schenkels verlaufenden schienenfemliegenden zweiten Schenkel (26, 40) sowie gelenkig mit jeweils ersten und zweiten Enden des ersten und zweiten Schenkels verbundene dritte und vierte Schenkel (24, 28, 42, 44) umfasst und die Halterung für den Schleifschuh mit einem einzigen zu dem Fahrzeug mit zumindest einer seiner Schwenkachsen verstellbaren Schenkel verbunden ist.
**dadurch gekennzeichnet,**
**dass** die Halterung (58) mit dem ersten oder dem vierten Schenkel (22, 38, 46; 24, 44, 52) über zumindest eine eine Sollbruchstelle (60, 62) aufweisende Verbindung (64, 66) verbunden ist.

2. Stromabnehmer nach Anspruch 1,
**dadurch gekennzeichnet,**
**dass** die Halterung (58) für den Schleifschuh (68) mit einem zu dem Fahrzeug mit seinen beiden Schwenkachsen verstellbaren Schenkel (24, 44, 52) verbunden ist.

3. Stromabnehmer nach Anspruch 1 oder 2,
**dadurch gekennzeichnet,**
**dass** der die ersten Enden des ersten und zweiten Schenkels (22, 26, 38, 40) verbindende dritte Schenkel (28, 42) ortsfest zu dem Fahrzeug bzw. mit diesem verbundenen Gehäuse (33) des Stromabnehmers (32) angeordnet ist, dass der vierte Schenkel (24, 44, 52) mit seinen mit dem ersten und dem zweiten Schenkel verbundenen Schwenkachsen (78,80) verstellbar zu dem Fahrzeug ist und dass von dem vierten Schenkel die Halterung (58) für den Schleifschuh (68) ausgeht.

4. Stromabnehmer nach zumindest einem der vorhergehenden Ansprüche,
**dadurch gekennzeichnet,**
**dass** die Halterung (58) mit dem ersten oder vierten Schenkel (22, 24, 38, 44) über mehrere jeweils eine Sollbruchstelle (60, 62) aufweisende Verbindungen (64, 66) wie Bolzen verbunden ist.

5. Stromabnehmer nach zumindest einem der vorhergehenden Ansprüche,
**dadurch gekennzeichnet,**
**dass** der Schleifschuh (68) über die Verbindung bzw. Verbindungen (64, 66) wie Bolzen elektrisch leitend mit der Halterung (58) verbunden ist.

6. Stromabnehmer nach zumindest einem der vorhergehenden Ansprüche,
**dadurch gekennzeichnet,**
**dass** von dem mit der Halterung (52) verbundenen Schenkel (22, 24, 38, 44), insbesondere dem vorzugsweise als Kopfteil (52) des Stromabnehmers ausgebildeten vierten Schenkel ein zum Antrieb des Fahrzeugs führender Stromleiter ausgeht.

7. Stromabnehmer nach zumindest einem der vorhergehenden Ansprüche,
**dadurch gekennzeichnet,**
**dass** von dem vierten Schenkel (24, 44) bzw. dem Kopfteil (52) ein auf der dritten Schiene (74) abstützbarer Notlaufschuh (98) ausgeht.

8. Stromabnehmer nach zumindest einem der vorhergehenden Ansprüche,
**dadurch gekennzeichnet,**
**dass** der dritte Schenkel (28, 42) ein Abschnitt des Gehäuses (33) des Stromabnehmers (32) ist.

9. Stromabnehmer nach zumindest einem der vorhergehenden Ansprüche,
**dadurch gekennzeichnet,**
**dass** sowohl der erste Schenkel (22, 38) als auch der zweite Schenkel (26, 40) aus elektrisch isolierendem Material bestehen.

10. Stromabnehmer nach zumindest einem der vorhergehenden Ansprüche,
**dadurch gekennzeichnet,**
**dass** der zweite Schenkel (26, 40) durch zumindest zwei stabförmige Elemente wie Lenker (48, 50) gebildet ist.

11. Stromabnehmer nach zumindest einem der vorhergehenden Ansprüche,
**dadurch gekennzeichnet,**
**dass** der erste Schenkel (22, 38) wie Schwinge (46) in Bezug auf eine dessen Schwenkachsen (78, 82) verbindende Gerade zur dritten Schiene (74) bei sich auf der dritten Schiene abstützendem Schleifschuh (68) einen Winkel ϕ mit ϕ ≤ 15° einschließt.

12. Stromabnehmer nach zumindest einem der vorhergehenden Ansprüche,
**dadurch gekennzeichnet,**
**dass** von dem Gehäuse (33) des Stromabnehmers (32) oder dem Fahrzeug von einem ersten Anlenkpunkt (92) ein eine Druckkraft auf den ersten Schenkel (22, 38) ausübendes Federelement (94) wie eine Druckfeder ausgeht, das mit dem ersten Schenkel in einem zweiten Anlenkpunkt (96) verbunden ist, dass der zweite Anlenkpunkt zwischen den Schwenkachsen (78, 82) des ersten Schenkels liegt, dass bei auf der dritten Schiene (74) abgestütztem Schleifschuh (68) der zweite Anlenkpunkt zwischen der dritten Schiene und einer den ersten Anlenkpunkt mit der den ersten Schenkel mit dem dritten Schenkel (28, 42) verbindenden Drehachse verbindenden Gerade verläuft und dass bei angehobener Position des Stromabnehmers der zweite Anlenkpunkt zwischen der Geraden und dem Fahrzeug bzw. Befestigung des Gehäuses (33) mit dem Fahrzeug verläuft, wobei die auf den zweiten Anlenkpunkt einwirkende Druckkraft zu einer Selbsthaltung des Basisparallelogramms (20) in der angehobenen Position führt.

13. Stromabnehmer nach zumindest einem der vorhergehenden Ansprüche,
**dadurch gekennzeichnet,**
**dass** der erste Schenkel (22, 38) wie die Schwinge (46) über eine Hohlwelle (82) als die Schwenkachse mit Seitenwangen (34, 36) als dem dritten Schenkel (28, 42) eines im Schnitt U-förmigen Abschnitts des Gehäuses (33) verbunden ist.

14. Stromabnehmer nach zumindest einem der vorhergehenden Ansprüche,
**dadurch gekennzeichnet,**
**dass** die den zweiten Schenkel (26, 40) bildenden zwei stabförmigen Elemente wie die Lenker (48, 50) über kalottenförmig ausgebildete Lagerpunkte mit dem dritten bzw. vierten Schenkel (24, 28, 42, 44) verbunden sind.

15. Stromabnehmer nach zumindest einem der vorhergehenden Ansprüche,
**dadurch gekennzeichnet,**
**dass** das Fahrzeug bzw. das Gehäuse (33) des Stromabnehmers (32) mit dem ersten Schenkel (22, 38) über einen Pneumatikzylinder verbunden ist.

16. Stromabnehmer nach zumindest einem der vorhergehenden Ansprüche,
**dadurch gekennzeichnet,**
**dass** das Parallelogramm (20) zwei kurze Schenkel (24, 28) und zwei lange Schenkel (22, 26) aufweist und dass die Halterung (58) von einem kurzen Schenkel (24) bzw. einer Verlängerung von diesem ausgeht.

## Claims

1. Current collector (32) for a third rail (74), comprising a base parallelogram (20) extending from a vehicle, with a mounting (58) for a collector shoe (30, 68) extending from said parallelogram, wherein the base parallelogram comprises a first leg (22, 38) running on the rail side, a second leg (26, 40) running along the first leg away from the rail as well as third and fourth legs (24, 28, 42, 44) connected in an articulating fashion with first and second ends, respectively, of the first and second legs and wherein the mounting for the collector shoe is connected with a single leg adjustable in relation to the vehicle through at least one of its swivel axes,
**characterized in**
**that** the mounting (58) is connected to the first or the fourth leg (22, 38, 46; 24, 44, 52) by means of at least one connection (64, 66) comprising a predetermined breaking point (60, 62).

2. Current collector according to claim 1,
**characterized in**
**that** the mounting (58) for the collector shoe (68) is connected to a leg (24, 44, 52) that is adjustable in relation to the vehicle with its two swivel axes.

3. Current collector according to claim 1 or 2,
**characterized in**
**that** the third leg (28, 42) connecting the first ends of the first and second legs (22, 26, 38, 40) is arranged in a stationary fashion in relation to the vehicle or housing (33) of the current collector (32) connected to said vehicle, that the fourth leg (24, 44, 52) is adjustable in relation to the vehicle with its swivel axes (78, 80) connected to the first and the second leg, and that the mounting (58) for the collector shoe (68) extends from the fourth leg

4. Current collector according to at least one of the preceding claims,
**characterized in**
**that** the mounting (58) is connected to the first or the fourth leg (22, 24, 38, 44) by means of several connections (64, 66) such as bolts, each comprising a predetermined breaking point (60, 62).

5. Current collector according to at least one of the preceding claims,
**characterized in**
**that** the collector shoe (68) is connected to the mounting (58) in an electrically conductive fashion by means of the connection or connections (64, 66) such as bolts.

6. Current collector according to at least one of the preceding claims,
**characterized in**
**that** a current conductor leading to the drive of the vehicle extends from the leg (22, 24, 38, 44) connected to the mounting (52), in particular from the fourth leg that is designed preferably as head part (52) of the current collector.

7. Current collector according to at least one of the preceding claims,
**characterized in**
**that** an emergency running shoe (98), which can be supported by the third rail (74), extends from the fourth leg (24, 44) or the head part (52).

8. Current collector according to at least one of the preceding claims,
**characterized in**
**that** the third leg (28, 42) is a segment of the housing (33) of the current collector (32).

9. Current collector according to at least one of the preceding claims,
**characterized in**
**that** both the first leg (22, 38) and the second leg (26, 40) consist of electrically insulating material.

10. Current collector according to at least one of the preceding claims,
**characterized in**
**that** the second leg (26, 40) is formed by at least two bar-shaped elements such as rods (48, 50).

11. Current collector according to at least one of the preceding claims,
**characterized in**
**that that** the first leg (22, 38) such as a rocker (46) in relation to a line connecting its swivel axes (78, 82) forms an angle ϕ with the third rail (74), with ϕ ≤ 15° when the collector shoe (68) is supported by the third rail.

12. Current collector according to at least one of the preceding claims,
**characterized in**
**that** a spring element (94) such as a pressure spring, which applies a pressure force onto the first leg (22, 38), extends from the housing (33) of the current collector (32) or from the vehicle from a first articulated point (92), said element being connected with the first leg in a second articulated point (96), that the second articulated point is located between the swivel axes (78, 82) of the first leg, that the second articulated point runs between the third rail and a line connecting the first articulated point with the rotational axis connecting the first leg with the third leg (28, 42) when the collector shoe (68) is supported by the third rail (74), and that in a lifted position of the current collector the second articulated point runs between the line and the vehicle or mounting of the housing (33) to the vehicle, wherein the pressure force acting upon the second articulated point leads to a lock of the base parallelogram (20) in the raised position.

13. Current collector according to at least one of the preceding claims,
**characterized in**
**that** the first leg (22, 38) as the rocker (46) is connected by means of a hollow shaft (82) as the swivel axis to side flanges (34, 36) as the third leg (28, 42) of a segment of the housing (33), said segment having a U-shaped profile in section.

14. Current collector according to at least one of the preceding claims,
**characterized in**
**that** the bar-shaped elements such as the rods (48, 50) forming the second leg (26, 40) are connected to the third or fourth leg (24, 28, 42, 44) by means of dome-shaped seating points.

15. Current collector according to at least one of the preceding claims,
**characterized in**
**that** the vehicle or the housing (33) of the current collector (32) is connected to the first leg (22, 38) by means of a pneumatic cylinder.

16. Current collector according to at least one of the preceding claims,
**characterized in**
**that** the parallelogram (20) comprises two short legs (24, 28) and two long legs (22, 26) and that the mounting (58) extends from a short leg (24) or an extension thereof.

## Revendications

1. Appareil de prise de courant (32) pour un troisième rail (74), comprenant un parallélogramme de base (20) partant d'un véhicule, avec une fixation (58) pour un frotteur (30, 68) issue dudit parallélogramme, sachant que le parallélogramme de base comprend un premier côté (22, 38) s'étendant près du rail, un deuxième côté (26, 40) éloigné du rail s'étendant parallèlement au premier côté, ainsi qu'un troisième et un quatrième côtés (24, 28, 42, 44) reliés respectivement de manière articulée aux premières et secondes extrémités du premier et du deuxième côtés, et que la fixation pour le frotteur est reliée à un seul côté orientable par rapport au véhicule au moyen d'au moins un de ses axes de pivotement,
**caractérisé en ce**
**que** la fixation (58) est reliée au premier ou au quatrième côté (22, 38, 46 ; 24, 44, 52) par au moins une pièce de jonction (64, 66) présentant un point destiné à la rupture (60, 62).

2. Appareil de prise de courant selon la revendication 1,
**caractérisé en ce**
**que** la fixation (58) pour le frotteur (68) est reliée à un côté (24, 44, 52) orientable par rapport au véhicule au moyen de ses deux axes de pivotement.

3. Appareil de prise de courant selon la revendication 1 ou 2,
**caractérisé en ce**
**que** le troisième côté (28, 42) reliant les premières extrémités du premier et du deuxième côtés (22, 26, 38, 40) est placé de manière fixe par rapport au véhicule ou au boîtier (33) de l'appareil de prise de courants (32) relié au véhicule, que le quatrième côté (24, 44, 52) est orientable par rapport au véhicule au moyen de ses axes de pivotement (78, 80) reliés au premier et au deuxième côtés, et que la fixation (58) pour le frotteur (68) part du quatrième côté.

4. Appareil de prise de courant selon au moins l'une des revendications précédentes,
**caractérisé en ce**
**que** la fixation (58) est reliée au premier ou au quatrième côté (22, 24, 38, 44) par plusieurs pièce de jonction (64, 66), telles que des boulons, présentant chacune un point destiné à la rupture (60, 62).

5. Appareil de prise de courant selon au moins l'une des revendications précédentes,
**caractérisé en ce**
le frotteur (68) est relié de manière électroconductrice à la fixation (58) par la pièce de jonction ou les pièces de jonction (64, 66) telles que des boulons.

6. Appareil de prise de courant selon au moins l'une des revendications précédentes,
**caractérisé en ce**
**qu'**un conducteur de courant menant à la commande du véhicule part du côté (22, 24, 38, 44) relié à la fixation (52), en particulier du quatrième côté formé de préférence comme tête (52) de l'appareil de prise de courant.

7. Appareil de prise de courant selon au moins l'une des revendications précédentes,
**caractérisé en ce**
**qu'**un frotteur de secours (98) pouvant s'appuyer sur le troisième rail (74) part du quatrième côté (24, 44) ou de la tête (52).

8. Appareil de prise de courant selon au moins l'une des revendications précédentes,
**caractérisé en ce**
**que** le troisième côté (28, 42) est une section du boîtier (33) de l'appareil de prise de courant (32).

9. Appareil de prise de courant selon au moins l'une des revendications précédentes,
**caractérisé en ce**
**que** le premier côté (22, 38) ainsi que le deuxième côté (26, 40) sont constitués d'un matériau isolant électriquement.

10. Appareil de prise de courant selon au moins l'une des revendications précédentes,
**caractérisé en ce**
**que** le deuxième côté (26, 40) est constitué par au moins deux éléments en forme de barre tels que des bielles (48, 50).

11. Appareil de prise de courant selon au moins l'une des revendications précédentes,
**caractérisé en ce**
**que** lorsque le frotteur (68) s'appuie sur le troisième rail, le premier côté (22, 38) tel qu'une bielle oscillante (46), rapporté à une droite reliant ses axes de pivotement (78, 82) fait avec le troisième rail (74) un angle ϕ tel que ϕ ≤ 15°.

12. Appareil de prise de courant selon au moins l'une des revendications précédentes,
**caractérisé en ce**
**que** du boîtier (33) de l'appareil de prise de courant (32) ou du véhicule part d'un premier point d'articulation (92) un élément élastique (94) tel qu'un ressort de pression qui exerce une force de compression sur le premier côté (22, 38) et est relié au premier côté à un deuxième point d'articulation (96), que le deuxième point d'articulation est situé entre les axes de pivotement (78, 82) du premier côté, que lorsque le frotteur (68) s'appuie sur le troisième rail (74), le deuxième point d'articulation se situe entre le troisième rail et une droite reliant le premier point d'articulation avec l'axe de pivotement qui relie le premier côté au troisième côté (28, 42), et qu'en position relevée de l'appareil de prise de courant, le deuxième point d'articulation se situe entre la droite et le véhicule ou la fixation du boîtier (33) avec le véhicule, sachant que la force de compression agissant sur le deuxième point d'articulation provoque un blocage du parallélogramme de base (20) dans la position relevée.

13. Appareil de prise de courant selon au moins l'une des revendications précédentes,
**caractérisé en ce**
le premier côté (22, 38) tel que la bielle oscillante (46) est relié par un arbre creux (82), formant l'axe de pivotement, à des joues latérales (34, 36) formant le troisième côté (28, 42) d'une section du boîtiers (33) ayant une forme de U en coupe transversale.

14. Appareil de prise de courant selon au moins l'une des revendications précédentes,
**caractérisé en ce**
**que** les éléments en forme de barre formant le deuxième côté (26, 40) tels que les bielles (48, 50) sont reliés aux troisième et quatrième côtés (24, 28, 42, 44) par des points de fixation en forme de calotte.

15. Appareil de prise de courant selon au moins l'une des revendications précédentes,
**caractérisé en ce**
**que** le véhicule ou le boîtier (33) de l'appareil de prise de courants (32) est relié au premier côté (22, 38) par un vérin pneumatique.

16. Appareil de prise de courant selon au moins l'une des revendications précédentes,
**caractérisé en ce**
**que** le parallélogramme (20) présente deux petits côtés (24, 28) et deux grands côtés (22, 26) et que la fixation (58) part d'un petit côté (24) ou d'un prolongement de ce dernier.
